# EUROPÄISCHE PATENTANMELDUNG

(11) **EP 4 567 511 A1**
(43) Veröffentlichungstag der Anmeldung: **11.06.2025**
(21) Anmeldenummer: 24217198.1
(22) Anmeldetag: 03.12.2024
(51) Int. Cl.: G03B 17/08, B05B 1/20, B05B 1/34

(54) **UNTERWASSERKAMERA ZUR AUFNAHME VON UNTERWASSERBILDERN**

(30) Priorität: 05.12.2023 DE 102023133995
(71) Anmelder: Ni-Ko-Tech System GmbH, 21435 Stelle Niedersachsen (DE)
(72) Erfinder: Ansey, Johann-Wilhelm, 21435 Stelle (DE)
(74) Vertreter: Beckord & Niedlich Patentanwälte PartG mbB

(57) **Zusammenfassung**

Die Erfindung betrifft eine Unterwasserkamera (1) zur Aufnahme von Unterwasserbildern, umfassend eine Kamera (2), die zur Aufnahme von Bildern in einer Blickrichtung ausgelegt ist, eine Düseneinheit und eine Wasserzuführung (5), zur Versorgung der Düseneinheit (3) mit Klarwasser, wobei die Düseneinheit eine Mehrzahl von Düsen (3) umfasst, die jeweils einen Wassereinlass (E) und einen Wasserauslass (A) aufweisen und so angeordnet sind, dass durch die Düsen (3) geleitetes Wasser im Wesentlichen in Blickrichtung aus den Düsen (3) ausströmt, wobei ein Einströmbereich (B) der Düsen (3) am Wassereinlass (E) sich zum Wasserauslass (A) hin verengt.

## Beschreibung

Die Erfindung betrifft eine Unterwasserkamera zur Aufnahme von Unterwasserbildern.

Unterwasserkameras werden für viele unterschiedliche Anwendungen benötigt. Unter einer Unterwasserkamera versteht man eine Kamera, die wasserdicht verkapselt ist. Dies kann durch Einlagerung einer (normalen) Kamera in ein wasserdichtes Gehäuse oder durch eine wasserdichte Herstellung des Kameragehäuses erfolgen.

Neben der Aufnahme von Motiven in klaren Gewässern ist insbesondere die Unterwasserinspektion ein wichtiges Anwendungsfeld einer Unterwasserkamera. Im Zuge einer solchen Unterwasserinspektion werden beispielsweise Unterwasserbilder von Schiffsrümpfen oder Bauwerken wie Spundwände, Kaimauern oder Schleusentore mit der Unterwasserkamera angefertigt und an Land ausgewertet.

Bei Unterwasseraufnahmen tritt häufig das Problem der eingeschränkten Sichtweite auf, da Schwebstoffe im Wasser die Sichtweite deutlich einschränken. Beträgt die Sichtweite in klarem Meerwasser normalerweise bis 30 Meter, so kann bei einem hohen Grad von Schwebstoffen die Sichtweite auf wenige oder null Zentimeter sinken.

Ein großes Problem bei Unterwasserinspektionen ist, dass diese oftmals dort durchgeführt werden müssen, wo eine hohe Schwebstoffdichte vorliegt, z.B. an Schleuseneinfahrten oder in Hafenbecken. Dabei ist es manchmal unmöglich, auswertbare Bilder zu erzielen, da diese durch die eingeschränkten Sichtverhältnisse keine verwertbaren Ergebnisse ermöglichen. Auch eine Verwendung von Scheinwerfern hilft oftmals nicht, da die Schwebstoffe das Licht reflektieren und diffus in die Kamera lenken.

Somit bleibt in verschmutzten Umgebungen oft nur die Möglichkeit, Untersuchungen haptisch mit Tauchern oder mittels Sonar vorzunehmen. Untersuchungen durch Taucher stellen sowohl eine subjektive Begutachtung dar als auch eine unvollkommene, da einige Schäden, die visuell gut erkannt werden könnten, haptisch nicht ertastet bzw. klar erkannt werden können. Eine Untersuchung mittels Sonar hat eine sehr geringe Auflösung und es können keine Schäden erkannt werden, die sich nicht mittels Verformungen äußern, z.B. Korrosionen.

Es ist eine Aufgabe der vorliegenden Erfindung, eine Unterwasserkamera zur Aufnahme von Unterwasserbildern in einer Blickrichtung anzugeben, mit der die oben beschriebenen Nachteile vermieden werden.

Diese Aufgabe wird durch eine Unterwasserkamera gemäß den Patentansprüchen gelöst.

Eine erfindungsgemäße Unterwasserkamera dient zur Aufnahme von Unterwasserbildern. Sie umfasst eine Kamera, die zur Aufnahme von Bildern in einer Blickrichtung ausgelegt ist, eine Düseneinheit und eine Wasserzuführung zur Versorgung der Düseneinheit mit Klarwasser. Die Düseneinheit umfasst eine Mehrzahl von Düsen, die jeweils einen Wassereinlass und einen Wasserauslass aufweisen und so angeordnet sind, dass durch die Düsen geleitetes Wasser im Wesentlichen in Blickrichtung aus den Düsen ausströmt, wobei ein Einströmbereich der Düsen am Wassereinlass sich zum Wasserauslass hin verengt.

Die Kamera der Unterwasserkamera nimmt Bilder auf, die in ihrer Blickrichtung liegen. Sie ist in der Unterwasserkamera so angeordnet, dass ihre wasserempfindlichen Elemente wasserdicht verkapselt sind. Insbesondere ist sie im Inneren eines Gehäuses der Unterwasserkamera so angebracht, dass lediglich ihr Objektiv nach außen ragt. Sie kann aber auch komplett hinter einem durchsichtigen Fenster in der Gehäusewand angeordnet sein.

Die Düseneinheit umfasst mehrere Düsen. Diese können z.B. in einer Wandung eines Gehäuses der Unterwasserkamera ausgeformt sein, z.B. als Löcher. Sie müssen so angeordnet sein, dass durch die Düsen geleitetes Wasser im Wesentlichen in Blickrichtung aus den Düsen ausströmt, bevorzugt laminar (Es ist bevorzugt die Einhaltung der Reynoldszahl angestrebt). Damit ist gemeint, dass die Hauptabstrahlrichtung eines aus einer Düse austretenden Wasserstrahls im Wesentlichen parallel zur Blickrichtung ist. Der Begriff "im Wesentlichen" bedeutet hier maximal 20° zur Blickrichtung geneigt, bevorzugt maximal 10°, insbesondere maximal 5° oder gar maximal 1°. Angenommen die Düsen seien besagte Löcher in einer Seite der Unterwasserkamera und die Kamera schaut in Richtung der Flächennormalen aus dieser Seite heraus, dann sind die Löcher bevorzugt senkrecht zu dieser Seite ausgerichtet.

Bevorzugt umgeben die Düsen die Kamera und sind in Form einer Gruppe auf einem Kreis oder Mehreck um die Kamera herum angeordnet. Es ist besonders bevorzugt, dass die Düsen in mehreren Gruppen auf mehreren konzentrischen Kreisen oder Mehrecken (insbesondere bei benachbarten Kreisen/Mehrecken versetzt zueinander) angeordnet sind. Die Düsenanordnungen müssen dabei nicht unbedingt nahe an der Kamera liegen oder den gesamten Bereich um die Kamera herum homogen überdecken. Es kann durchaus der Abstand zwischen innerster und äußerster Gruppe kleiner sein, als der halbe Durchmesser der Anordnung der innersten Gruppe. In dem bevorzugten Fall, dass die Gruppen auf (konzentrischen) Kreisen angeordnet sind, wäre also der Radius des innersten Kreises größer als der Abstand des innersten Kreises zum äußersten. Dies hat den Vorteil, dass der Bereich vor der Kamera optimal mit Klarwasser aufgeklart werden kann, ohne die Sicht mit aufgewirbeltem Trub zu verschlechtern.

Die Düsen (z.B. die Löcher) sind jedoch nicht monoton zylindrisch, sondern haben einen Teil, der sich verengt (den Einströmbereich). Jede dieser Düsen hat einen Wassereinlass und einen Wasserauslass. Damit sind die Seiten der Düse gemeint, in die das Wasser ein- bzw. ausströmt. Zwischen Wassereinlass und Wasserauslass befindet sich der Düsenkanal. Derjenige Teil des Düsenkanals, der am Wassereinlass liegt, ist der Einströmbereich. Der Einströmbereich verengt sich zum Wasserauslass hin. Dies bedeutet, dass als Einströmbereich derjenige Teil eines Düsenkanals verstanden werden kann, der sich verengt. Mit "verengt" ist die Abnahme des Durchmessers des Düsenkanals in der bestimmungsgemäßen Fließrichtung von Wasser gemeint.

Die Wasserzuführung kann ein einfaches Rohr oder ein Schlauch sein. Sie muss dazu ausgestaltet sein, dass Wasser durch sie hindurch zur Düseneinheit geführt werden kann. In dem vorangehend beschriebenen Beispiel kann die Wasserzuführung ein Rohr sein, welches in das ringförmige Volumen führt. Darin kann sich das zugeführte Klarwasser verteilen und zu den Düseneinheiten gelangen. Die Wasserzuführung kann an ihrem der Kamera abgewandten Ende einen Flansch aufweisen, mit dem sie an eine Wasserquelle angeschlossen werden kann.

Auch wenn die Kamera von einem Akkumulator mit Energie versorgt werden kann und ihre Aufnahmen auf einem internen Speichermedium abspeichern kann, ist es dennoch von Vorteil, die Energieversorgung von außen vorzunehmen und auch die Aufnahmen extern abzuspeichern. Zu diesem Zweck kann ein Kabel durch die Wasserzuführung oder an der Wasserzuführung entlang geführt werden, durch das die Kamera mit Energie versorgt werden kann und ihre Aufnahmedaten geleitet werden können. Ein Kabel wird bevorzugt an der der Blickrichtung abgewandten Seite aus dem Gehäuse der Unterwasserkamera heraus geführt oder aus dessen Mantelfläche.

Bevorzugt kann die Kamera ihre Bilddaten auch per Funkübertragung senden, z.B. über ein WLAN, oder ein Mobilfunknetz. Es können diesbezüglich die bekannten Frequenzbereiche für Unterwasserfunk verwendet werden. Hierzu ist es bevorzugt, dass die Kamera mittels eines Akkumulators mit Energie versorgt wird, damit man auf jegliche Kabelverbindung verzichten kann.

Eine solche Unterwasserkamera kann insbesondere bei trüben Sichtverhältnissen brauchbare Aufnahme liefern. Dies ist insbesondere bei einer Unterwasserinspektion von Schiffen oder Bauten, z.B. von Spundwänden, Kaimauern oder Schleusentoren von großem Vorteil.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Wie oben bereits angedeutet, zeichnet sich eine bevorzugte Unterwasserkamera dadurch aus, dass die Düsen ringförmig um die Kamera herum angeordnet sind, bevorzugt auf mehreren konzentrischen Ringen (kreisförmig oder mehreckig).

Unabhängig von einer konkreten Düsenanordnung weist die Düseneinheit einen ringförmigen Raum um die Kamera herum auf, in den die Wasserzuführung mündet und in dessen Wand die Düsen angeordnet sind. Dieser Raum dient der Zuleitung von Klarwasser zu den einzelnen Düsen. Die Kamera ist hier im Zentrum des Raumes angeordnet und von Wänden umschlossen und der Raum umgibt die Kamera zumindest in einem Bereich orthogonal zur Blickrichtung um die Kamera herum. Wenn z.B die Unterwasserkamera ein zylindrisches Gehäuse aufweist, dann liegt die Kamera von inneren Wänden umgeben im Zentrum dieses Zylinders und der Raum darum herum zwischen den inneren Wänden und äußeren Wänden des Gehäuses ist der besagte Raum.

Eine bevorzugte Unterwasserkamera zeichnet sich dadurch aus, dass sie zusätzlich Düsen entgegen der Blickrichtung aufweist. Mittels dieser (zweiten) Düsen, die Wasser entgegengesetzt zu den vorgenannten (ersten) Düsen ausstoßen, können die Rückstoßkräfte der ersten Düsen aufgehoben und die Unterwasserkamera einfacher im Wasser stabil gehalten werden. Bevorzugt hat diese zweite Anordnung der Düsen gleich viele Düsen wie die erste Anordnung und ist insbesondere identisch zu der ersten Anordnung der Düsen gestaltet.

Zur einfachen Führung im Wasser kann die Unterwasserkamera auch einen Elektromotor aufweisen, der eine Schiffsschraube antreibt. und an dem Kameragehäuse montiert ist. Die Schiffsschraube kann dabei insbesondere so positioniert sein, dass sie einen Schub in Blickrichtung erzeugt, um dem Gegendruck der Düsen entgegenzuwirken. Dies stellt eine wassersparende Alternative zu den Düsen entgegen der Blickrichtung dar. Es ist aber auch bevorzugt, dass die Schiffsschraube lenkbar ist. Die Unterwasserkamera ist bevorzugt mit einer Steuereinheit ausgestaltet, welche dazu ausgelegt ist, die Lenkung und insbesondere auch den Schub der Schiffsschraube, bzw. einer Mehrzahl von solchen Schiffsschrauben mit Elektromotoren, zu steuern. Diese Steuereinheit ist ferner bevorzugt dazu ausgestaltet, per Kabel oder Funk ferngesteuert zu werden oder autark eine Position anzufahren und zu halten. Der Antrieb sowie die Steuerung können von einem Akkumulator oder mittels eines Kabels mit Energie versorgt werden.

Bevorzugt umfasst die Wasserzuführung eine Pumpe, welche Wasser mit Druck zu den Düsen pumpt. Die Pumpe kann durch ein Kabel von außen oder über einen Akkumulator der Unterwasserkamera mit Energie versorgt werden. Die Pumpe ist bevorzugt so gesteuert, dass einem auf die Unterwasserkamera wirkenden äußeren Wasserdruck entgegengewirkt wird. In einer Tiefe von X Metern wirkt dabei von außen ein Wasserdruck von X/10 bar. Dem sollte die Pumpe so entgegenwirken, dass stets ein vorgegebener resultierender Druck A an den Düsen wirkt. Dies wird erreicht, indem ein Druck von X/10+A aufgebaut wird. Befindet sich die Pumpe am Ufer und wird das Wasser durch einen Schlauch zur Unterwasserkamera geleitet, dann sollte auch der Widerstand des Schlauches in der Rechnung berücksichtigt werden.

Bei dieser Ausführungsform mit Pumpe ist besonders bevorzugt, dass die Wasserzuführung zusätzlich ein Filtersystem, insbesondere ein elektrisches Filtersystem, umfasst, welches dazu ausgestaltet ist, das von der Pumpe bewegte Wasser zu filtern. Dies ermöglicht es, umgebendes, verschmutztes Wasser so weit zu klären, dass es als Klarwasser für die Unterwasserkamera verwendet werden kann. Das Filtersystem kann nach einem Einsatz der Unterwasserkamera oder durch ein kurzzeitiges Umschalten der Pumpe gesäubert werden.

Die Unterwasserkamera kann durchaus mehrere Wasserzuführungen aufweisen, die Wasser in unterschiedliche Räume innerhalb des Gehäuses der Unterwasserkamera leiten, wobei das Gehäuse Düsen für jeden dieser Räume aufweist. Bevorzugt können die ersten Düsen aus einem ersten Raum ausgehen und die zweiten Düsen von einem zweiten Raum, Durch Beaufschlagung der beiden Räume mit unterschiedlichen Wasserdrücken kann auf die Kamera dann gezielt eine Kraft ausgeübt werden. Diesbezüglich ist auch bevorzugt, dass die Kamera in der Mantelfläche ihres Gehäuses (Die Seiten in der Blickrichtung und entgegengesetzt werden als "Stirnseiten" bezeichnet, die seitliche Wandung als "Mantelfläche") Düsen aufweist, die mit einem eigenen Raum und einer eigenen Wasserzuführung verbunden sind. Durch Beaufschlagung dieser Düsen mit Wasserdruck kann die Kamera seitlich bewegt werden bzw. gegen eine Strömung stabil gehalten werden.

Eine bevorzugte Unterwasserkamera zeichnet sich dadurch aus, dass die Verengung des Einströmbereichs regelmäßig ist oder die Änderung der Verengung zum Wasserauslass hin abnimmt. Die Verengung ist dabei bevorzugt trichterförmig mit geraden Wänden oder mit gebogenen Wänden, wobei bei Betrachtung des Querschnitts entlang der Längsachse die Biegung zum Wasserauslass hin steiler wird. Hat z.B. der Düsenkanal am Wasserauslass parallele Wände, so sind die Wände des Einströmbereichs trompetenförmig gebogen.

Bevorzugt ist der Querschnitt (orthogonal zur Längsachse) rund und der Einströmbereich konisch. Der Durchmesser des Einströmbereichs kann aber auch in Richtung des Wasserauslasses mit einem abnehmenden Gradienten kleiner werden (erst verjüngt sich der Querschnitt stark, dann weniger stark).

Eine bevorzugte Unterwasserkamera zeichnet sich dadurch aus, dass der Düsenkanal hinter dem Einströmbereich über seine Länge hinweg einen konstanten oder vom Wassereinlass fortlaufend größer werdenden Querschnitt hat. Dies dient der Verbesserung einer laminaren Strömung.

Bevorzugt ist der Querschnitt des Düsenkanals zylindrisch oder prismenförmig.

Eine bevorzugte Unterwasserkamera zeichnet sich dadurch aus, dass ein Düsendurchmesser d, der Düsen welcher zumindest am (zum Wasserauslass weisenden) Ende des Einströmbereichs vorliegt, mindestens 1/10 mm beträgt, bevorzugt mindestens 1 mm, insbesondere mindestens 2 mm und/oder maximal 8 mm, bevorzugt maximal 5 mm, insbesondere maximal 4 mm. Hierzu sollte bei einem vorgegebenen Wasserdruck die Reynoldszahl berücksichtigt werden, damit eine laminare Strömung erfolgt. Ein Düsendurchmesser von 3 mm oder zumindest im Bereich von 1 mm um diesen Wert herum, ist besonders vorteilhaft.

Eine bevorzugte Unterwasserkamera zeichnet sich dadurch aus, dass der Düsenkanal mindestens eine Länge von d hat (also mindestens dem Düsendurchmesser entspricht). Bevorzugt ist die Länge mindestens 2d, insbesondere mindestens 3d. Die Länge ist bevorzugt maximal 6d, bevorzugt maximal 4d. Eine Länge zwischen 3d und 4d ist für eine laminare Strömung besonders vorteilhaft.

Bevorzugt hat der Einströmbereich eine Länge von mindestens d/10, bevorzugt mindestens d/3, insbesondere mindestens d/2. Bevorzugt ist dessen Länge maximal 2d, insbesondere maximal d. Eine Länge zwischen d und d/2 ist für eine laminare Strömung besonders vorteilhaft.

Gemäß einer bevorzugten Ausführungsform sind Düsen (insbesondere alle Düsen) als Langlöcher ausgestaltet. Dies bedeutet, dass sie orthogonal zur Längsrichtung des Düsenkanals in Richtung ihrer Breite länger sind als in Richtung ihrer Höhe. Es werden dabei gerade Langlöcher bevorzugt (ein Rechteck von Halbkreisen begrenzt) oder Langlöcher, deren Form einem Bogen folgt, insbesondere einem Bogen, auf dem die Düsen angeordnet sind. Bevorzugt ist die Breite eines Langlochs länger als dessen Höhe, insbesondere mindestens das Doppelte der Höhe. Bevorzugt ist ein Langloch jedoch nicht breiter als das 10-fache dessen Höhe, insbesondere nicht breiter als das 7-fache dessen Höhe, oder gar kleiner als das 4-fache dessen Höhe. Eine Düse in Form eines Langlochs mit einer bevorzugten Höhe von 3 cm ist bevorzugt mindestens 5 mm breit und höchstens 1,5 mm breit.

Eine bevorzugte Unterwasserkamera zeichnet sich dadurch aus, dass der Einströmbereich einer Düse einem durch einen Torus begrenzten Volumen entspricht, z.B. der oberen Hälfte eines vom Torus umgebenen Innenbereichs. Dabei hat der kreisförmige Querschnitt des Torusvolumens (also ein gerader Schnitt durch das Ringvolumen) bevorzugt einen Radius von maximal d, besonders bevorzugt maximal 2/3d, insbesondere mindestens d/2 und/oder bevorzugt einen Radius von mindestens d/5, insbesondere mindestens d/3.

Eine bevorzugte Unterwasserkamera zeichnet sich dadurch aus, dass der minimale Abstand zwischen zwei benachbarten Düsen 5 mm ist, bevorzugt 8 mm und/oder dass der maximale Abstand zwischen zwei Düsen 50 mm ist, bevorzugt 30 mm. Es ist damit der Abstand zur nächstgelegenen Düse gemeint.

Die Unterwasserkamera kann zusätzlich Beleuchtungselemente aufweisen, z.B. Leuchtdioden. Diese sind bevorzugt um die Kamera herum angeordnet, insbesondere zwischen den Düsen und der Kamera und/oder zwischen den Düsen. Sie sind bevorzugt in Form einer Anzahl von Ringen um die Kamera herum angeordnet.

Die Unterwasserkamera kann eine Stange aufweisen, an der sie befestigt oder gehalten werden kann, welche insbesondere an der Mantelfläche des Gehäuses der Unterwasserkamera angebracht oder anbringbar ist. Es ist aber auch möglich, die Unterwasserkamera an der Wasserzuführung zu halten oder mittels eines Flanschs an der Wasserzuführung an einem Objekt zu befestigen, z.B. an einem Unterwasserroboter. Es ist nicht ausgeschlossen, das Kamerasystem mit einem Tauchroboter zu führen.

Insbesondere in dem Fall, dass die Kamera von Tauchern gehalten wird ist bevorzugt, dass das Bild der Kamera in der Taucherbrille dargestellt wird. Dazu sind bevorzugt an oder in der Taucherbrille ein Bildschirm und eine Darstellungsoptik eingebaut, die das Bild der Kamera, bevorzugt reflektiert am Brillenglas, einem Taucher darstellt. Es ist dabei bevorzugt, dass eine Messung der Position und Blickrichtung des Tauchers relativ zur Position und Blickrichtung der Unterwasserkamera erfolgt und die dem Taucher von der Unterwasserkamera übermittelten Bilder basierend auf dieser Messung dargestellt werden. Die Technik dazu ist aus der augmentierten und virtuellen Realität bekannt. In Kombination mit der Unterwasserkamera erhält der Taucher damit ein Bild, wie es bei einer klaren Umgebung herrschen würde.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 perspektivisch eine Unterwasserkamera gemäß der Erfindung.
Figur 2 die Unterwasserkamera in Aufsicht von vorne.
Figur 3 ein Beispiel einer Unterwasserkamera als Schnittzeichnung von der Seite.
Figur 4 eine bevorzugte Düsenform,
Figur 5 eine weitere bevorzugte Düsenform,
Figur 6 eine bevorzugte Düsenform mit Größenverhältnissen.
Figur 7 perspektivisch eine Unterwasserkamera gemäß der Erfindung,
Figur 8 Düsen in Form eines Langlochs.

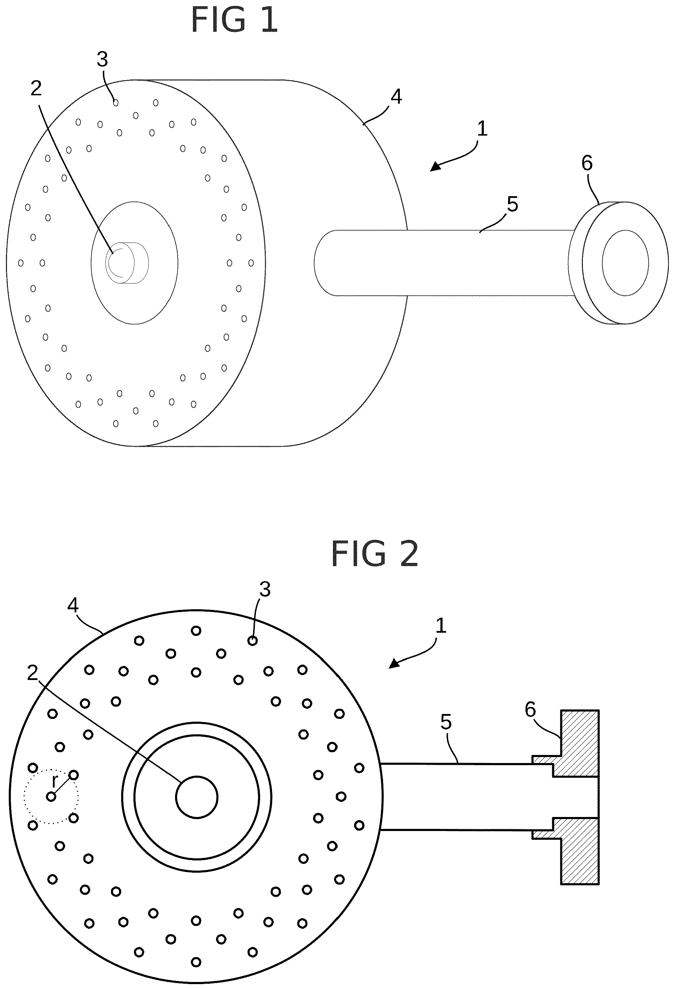

Figur 1 zeigt perspektivisch ein Beispiel für eine Unterwasserkamera gemäß der Erfindung. Sie umfasst eine Kamera 2, die zur Aufnahme von Bildern in einer Blickrichtung ausgelegt ist (hier sieht man das Objektiv), eine Düseneinheit und eine Wasserzuführung 5 zur Versorgung der Düseneinheit mit Klarwasser. Die Düseneinheit wird durch die Düsen und den Innenraum hinter den Düsen gebildet.

Die Düseneinheit umfasst eine Mehrzahl von Düsen 3, die in Form von drei Gruppen ringförmig auf drei konzentrischen Kreisen um die Kamera 2 herum angeordnet sind. Ein Schlauch kann an den Flansch 6 der Wasserzuführung 5 angeschlossen werden und die Unterwasserkamera mit Klarwasser versorgen. Die Unterwasserkamera 1 kann aber auch mittels des Flansches 6 an einem Objekt befestigt werden, z.B. an einem Schiff oder einem Tauchroboter.

Figur 2 zeigt eine Unterwasserkamera wie sie z.B. in Figur 1 gezeigt wurde, in Aufsicht von vorne. Hier ist die Anordnung der drei Gruppen von Düsen 3 auf den drei konzentrischen Kreisen sehr gut zu erkennen. Der innerste Kreis kann einen Durchmesser von z.B. 130 mm haben, der mittlere 145 mm und der äußerste 160 mm. Auf jedem Kreis liegen 18 Düsen, die z.B. einen Durchmesser des Düsenkanals von 3 mm haben können (und einen Abstand auf dem jeweiligen Kreis von ca. 24 mm innen und 30 mm außen zueinander). Die mittlere der drei Gruppen von Düsen ist versetzt zur inneren und äußeren angeordnet. Die Abstände der Düsen liegen im Bereich zwischen 8 mm und 20 mm. Links ist punktiert ein Kreis angedeutet, der den minimalen Abstand r zwischen zwei benachbarten Düsen 3 darstellen soll.

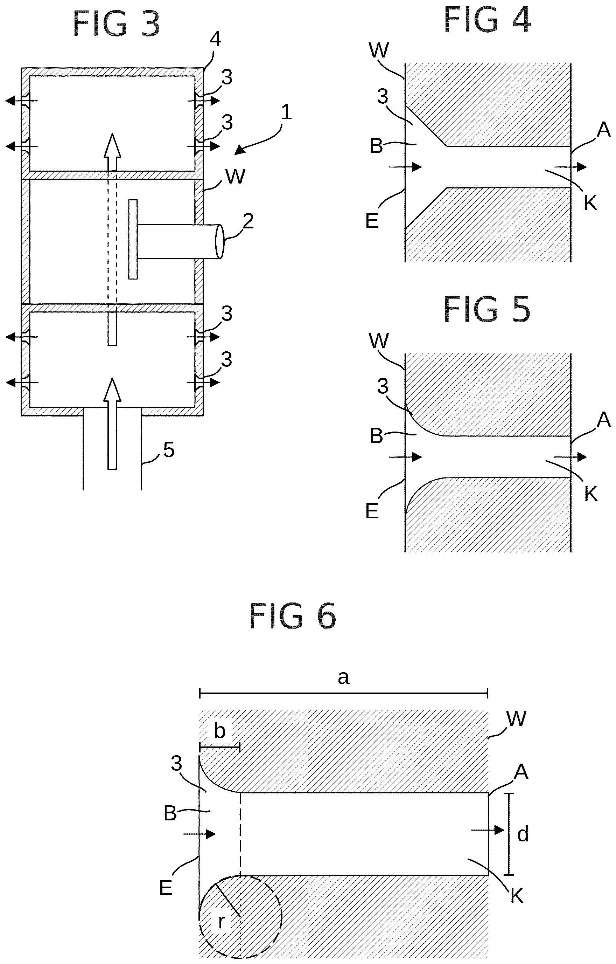

Figur 3 zeigt eine bevorzugte Unterwasserkamera als Schnittzeichnung von der Seite. In der Mitte ist die Kamera 2 in einem von Wänden W umschlossenen Innenraum angeordnet. Dieser Raum hat die Form eines Zylinders. Auch das Gehäuse 4 der Unterwasserkamera 1 ist zylinderförmig, so dass der Raum zwischen Innenraum und Gehäusewand W ringförmig ist. Klarwasser, welches in Richtung des unteren Pfeils durch die Wasserzuführung 5 einströmt, kann sich in dem gesamten ringförmigen Raum verteilen und gleichmäßig aus den Düsen 3 austreten (Pfeile). Hier sind nur zwei Gruppen von Düsen 3 gezeigt, die ringförmig um die Kamera 2 herum als Löcher in der Wand W angeordnet sind. Als eine Besonderheit weist die Unterwasserkamera 1 zusätzlich Düsen 3 entgegen der Blickrichtung auf.

Figur 4 zeigt eine bevorzugte Düsenform. Die Darstellung kann als Vergrößerung der Düsen 3 in der Wand W der Figur 3 angesehen werden und zeigt eine mögliche Variante für eine Düse 3. Die Düse 3 hat einen Wassereinlass E und einen Wasserauslass A, wobei ein Einströmbereich B am Wassereinlass E sich zum Wasserauslass A hin konisch verengt.

Figur 5 zeigt eine weitere bevorzugte Düsenform. Auch diese Darstellung kann als Vergrößerung der Düsen 3 in der Wand W der Figur 3 angesehen werden und zeigt eine weitere mögliche Variante für eine Düse 3. Die Düse 3 hat hier einen trompetenförmigen Einströmbereich B am Wassereinlass E, der sich zum Wasserauslass A hin verengt. Der Durchmesser wird also in Richtung des Wasserauslass A mit einem abnehmenden Gradienten kleiner.

Figur 6 zeigt eine bevorzugte Düsenform mit Größenverhältnissen. Der Düsenkanal K hinter dem Einströmbereich B hat hier über seine Länge hinweg einen konstanten Querschnitt und ist bevorzugt zylindrisch. Der Durchmesser d das Düsenkanals K beträgt hier z.B. 3 mm. Ein Durchmesser zwischen 2 mm und 4 mm ist für eine laminare Strömung besonders vorteilhaft. Die Länge a des Düsenkanals K beträgt in diesem Beispiel 3,5 d. Da die Düse 3 ein Loch in der Wand W des Gehäuses 4 der Unterwasserkamera ist, sollte die Wandstärke also bei 3 mm Düsendurchmesser 10,5 mm betragen.

Die Länge b des Einströmbereichs B beträgt hier z.B. 1,5 mm, also der Hälfte des Durchmessers der Düse. Die Form des Einströmbereichs B entspricht einem durch einen Torus begrenzten Volumen (dessen oberer Hälfte des Innenraums). Der kreisförmige Querschnitt des Torusvolumens hat in diesem Beispiel einen Radius r, der der Hälfte des Durchmessers d der Düse 3 entspricht.

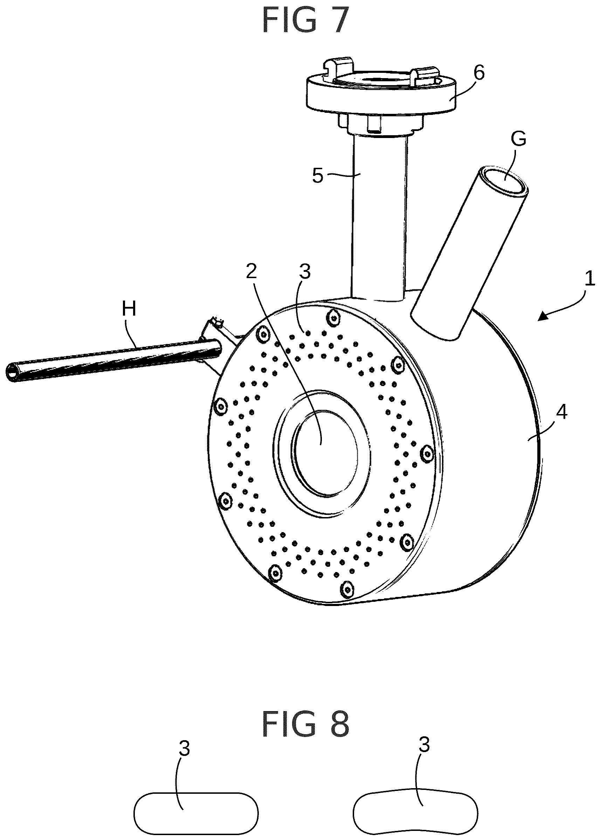

Figur 7 zeigt perspektivisch ein Beispiel für eine Unterwasserkamera gemäß der Erfindung wie sie in der Praxis verwendet werden könnte. Sie ähnelt der Unterwasserkamera von Figur 1 mit einer Kamera 2, drei Ringen von Düsen 3, und einer Wasserzuführung 5, weist jedoch mit einem Griff G, an dem sie von einem Taucher gehalten oder an einer Spundwand angebracht werden kann und einer Haltestange H, mit der sie an einem Objekt, z.B. einem U-Boot, einem Schiff oder auch einer Spundwand, montiert werden kann, mehr Details auf als Figur 1.

Figur 8 zeigt Düsen 3 in Form eines Langlochs in Aufsicht. Die Düsen 3 sind hier nicht kreisrund wie in den vorangehenden Figuren dargestellt, sondern haben die Form eines Langlochs. Dieses Langloch kann gerade sein, wie links dargestellt oder es kann eine leicht gebogene Form haben, um sich an die Form eines Kreises anzupassen, auf dem mehrere solcher Düsen 3 liegen. Der Längsschnitt einer solchen Düse 3 sieht bevorzugt aus wie in den Figuren 4 bis 6 dargestellt. Die Breite des Langlochs (von rechts nach links) ist das dreifache dessen Höhe (von oben nach unten).

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen.

### Bezugszeichenliste

- 1: Unterwasserkamera
- 2: Kamera
- 3: Düse
- 4: Gehäuse
- 5: Wasserzuführung
- 6: Flansch
- A: Wasserauslass
- B: Einströmbereich
- E: Wassereinlass
- G: Griff
- H: Haltestange
- K: Düsenkanal
- W: Wand

## Patentansprüche

1. Unterwasserkamera (1) zur Aufnahme von Unterwasserbildern, umfassend eine Kamera (2), die zur Aufnahme von Bildern in einer Blickrichtung ausgelegt ist, eine Düseneinheit und eine Wasserzuführung (5) zur Versorgung der Düseneinheit mit Klarwasser, wobei die Düseneinheit eine Mehrzahl von Düsen (3) umfasst, die jeweils einen Wassereinlass (E) und einen Wasserauslass (A) aufweisen und so angeordnet sind, dass durch die Düsen (3) geleitetes Wasser im Wesentlichen in Blickrichtung aus den Düsen (3) ausströmt, wobei ein Einströmbereich (B) der Düsen (3) am Wassereinlass (E) sich zum Wasserauslass (A) hin verengt.

2. Unterwasserkamera (1) nach Anspruch 1, **dadurch gekennzeichnet, dass** die Düsen (3) ringförmig um die Kamera (2) herum angeordnet sind, bevorzugt auf mehreren konzentrischen Ringen, bevorzugt wobei die Düseneinheit einen ringförmigen Raum um die Kamera (2) herum aufweist, in den die Wasserzuführung (5) mündet und in dessen Wand (W) die Düsen (3) angeordnet sind.

3. Unterwasserkamera (1) nach einem der vorangehenden Ansprüche, **dadurch gekennzeichnet, dass** sie zusätzlich Düsen (3) entgegen der Blickrichtung aufweist.

4. Unterwasserkamera (1) nach einem der vorangehenden Ansprüche, **dadurch gekennzeichnet, dass** die Verengung des Einströmbereichs (B) regelmäßig ist oder die Änderung der Verengung zum Wasserauslass (A) hin abnimmt, bevorzugt wobei der Querschnitt rund ist und der Einströmbereich (B) konisch ist oder der Durchmesser in Richtung des Wasserauslasses (A) mit einem abnehmenden Gradienten kleiner wird, wobei der Einströmbereich (B) bevorzugt trompetenförmig ist.

5. Unterwasserkamera (1) nach einem der vorangehenden Ansprüche, **dadurch gekennzeichnet, dass** ein Düsenkanal (K) hinter dem Einströmbereich (B) über seine Länge hinweg einen konstanten oder vom Wassereinlass (E) fortlaufend größer werdenden Querschnitt hat, bevorzugt wobei der Querschnitt zylindrisch oder prismenförmig ist.

6. Unterwasserkamera (1) nach einem der vorangehenden Ansprüche, **dadurch gekennzeichnet, dass** ein Durchmesser d, der Düsen (3) welcher zumindest am Ende des Einströmbereichs (B) vorliegt, mindestens 1/10 mm beträgt, bevorzugt mindestens 1 mm, insbesondere mindestens 2 mm und/oder maximal 8 mm, bevorzugt maximal 5 mm, insbesondere maximal 4 mm.

7. Unterwasserkamera (1) nach Anspruch 6, **dadurch gekennzeichnet, dass** die Länge des Düsenkanals (K) mindestens dem Durchmesser d entspricht, bevorzugt mindestens 2d, insbesondere mindestens 3d und/oder maximal 6d entspricht, bevorzugt maximal 4d und/oder dass die Länge des Einströmbereichs (B) im Hinblick auf den Durchmesser d mindestens d/10 entspricht, bevorzugt mindestens d/3, insbesondere mindestens d/2 und/oder maximal 2d entspricht, bevorzugt maximal d.

8. Unterwasserkamera (1) nach Anspruch 6 oder 7, **dadurch gekennzeichnet, dass** die Düsen 3 als Langlöcher ausgestaltet sind, bevorzugt als gerade Langlöcher oder als Langlöcher, deren Form einem Bogen folgt, insbesondere einem Bogen, auf dem die Düsen 3 angeordnet sind,
bevorzugt wobei die Breite mindestens das Doppelte der Höhe beträgt und/oder nicht mehr als das 10-fache der Höhe beträgt, insbesondere nicht mehr als das 7-fache.

9. Unterwasserkamera (1) nach einem der vorangehenden Ansprüche, **dadurch gekennzeichnet, dass** der Einströmbereich (B) einer Düse (3) einem durch einen Torus begrenzten Volumen entspricht, bevorzugt wobei der kreisförmige Querschnitt des Torusvolumens einen Radius von maximal dem Durchmesser d, der Düse (3) entspricht, bevorzugt maximal 2/3d, insbesondere maximal d/2 und/oder mindestens d/5 entspricht, bevorzugt mindestens d/3.

10. Unterwasserkamera (1) nach einem der vorangehenden Ansprüche, **dadurch gekennzeichnet, dass** der minimale Abstand r zwischen zwei benachbarten Düsen (3) 5 mm ist, bevorzugt 8 mm und/oder dass der maximale Abstand zwischen zwei Düsen (3) 50 mm ist, bevorzugt 30 mm.
